# EUROPEAN PATENT APPLICATION

(11) **EP 4 660 219 A1**
(43) Date of publication of application: **10.12.2025**
(21) Application number: 24750136.4
(22) Date of filing: 26.01.2024
(51) Int. Cl.: C08G 77/388, C08F 290/06, G02C 7/04

(54) **SIDE-CHAIN URETHANE-MODIFIED SILICONE MACROMER AND COPOLYMER THEREOF**

(30) Priority: 30.01.2023 JP 2023011457
(71) Applicant: SHIN-ETSU CHEMICAL CO., LTD., Tokyo 1000005 (JP)
(72) Inventor: WATANABE, Takuma, Annaka-shi, Gunma 379-0224 (JP)
(74) Representative: Angerhausen, Christoph
(86) International application number: PCT/JP2024/002317
(87) International publication number: WO 2024/162187

(57) **Abstract**

Provided is a silicone macromer having improved compatibility with a polymerizable hydrophilic monomer.

A side-chain urethane-modified silicone macromer is represented by the following formula (1). 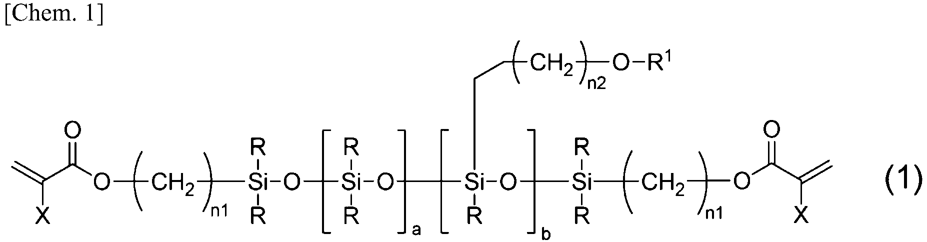 (In the formula (1), each R is an alkyl group having 1 to 10 carbon atoms or the like, each X is a hydrogen atom or a methyl group, each n1 is independently a number of 2 to 10, n2 is a number of 0 to 8, R¹ is a group represented by the formula (2) or (3), a is a number of 0 to 400, and b is a number of 1 to 100, provided that a + b satisfies 1 ≤ a + b ≤ 500. The formula (1) has at least one group represented by the formula (4).) 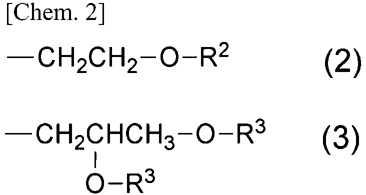 (In the formula (2), R² is a group represented by the formula (4). In the formula (3), each R³ is independently a hydrogen atom or a group represented by the formula (4).) 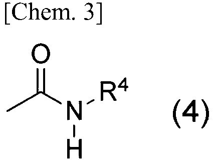 (In the formula (4), R⁴ is an alkyl group having 1 to 10 carbon atoms or the like.)

## Description

### Technical Field

The present invention relates to a side-chain urethane-modified silicone macromer and a copolymer thereof.

### Background Art

Silicones are widely used as a material for contact lenses due to their high oxygen permeability. However, since silicones are non-hydrophilic, there has been a report of introduction of a hydrophilic group for the purpose of improving compatibility with a polymerizable hydrophilic monomer.

As a silicone (silicone macromer) having a hydrophilic group introduced therein, there has been disclosed a compound having a hydroxy group introduced therein (Patent document 1). Introducing a hydroxy group improves compatibility of the silicone macromer with a polymerizable hydrophilic monomer. However, further improvement in compatibility of the silicone macromer with a polymerizable hydrophilic monomer is desired for more freely incorporating a polymerizable hydrophilic monomer, which serves as a material for contact lenses.

### Prior Art Document

### Patent documents

Patent document 1: US 2017/0008990 A

### Summary of Invention

### Technical Problem

Therefore, an object of the present invention is to provide a silicone macromer having improved compatibility with a polymerizable hydrophilic monomer.

### Solution to Problem

As a result of an intensive study for achieving the above-described object, the present inventor has found that a silicone macromer exhibits improved compatibility with a polymerizable hydrophilic monomer when provided with a urethane moiety at its side chain, and has completed the present invention.

That is, the present invention provides a side-chain urethane-modified silicone macromer and a copolymer thereof described below.
<1> A side-chain urethane-modified silicone macromer represented by the following formula (1). 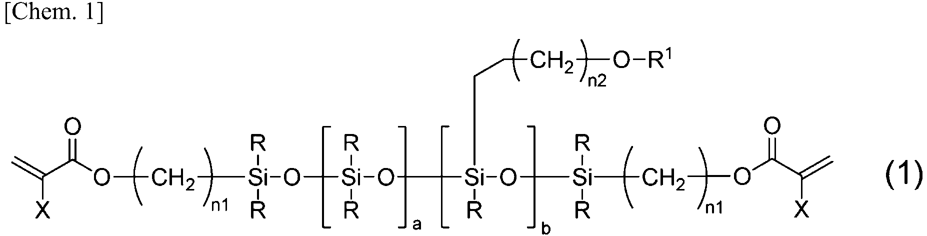 (In the formula (1), each R is independently a group selected from an alkyl group having 1 to 10 carbon atoms, an aryl group having 6 to 10 carbon atoms, or an aralkyl group having 7 to 10 carbon atoms; each X is independently a hydrogen atom or a methyl group; each n1 is independently a number of 2 to 10; n2 is a number of 0 to 8; a is a number of 0 to 400; b is a number of 1 to 100, provided that a + b satisfies 1 ≤ a + b ≤ 500; siloxane units enclosed in brackets a and b may be bonded randomly or in block; and R¹ is a group represented by a following formula (2) or (3) defined as: 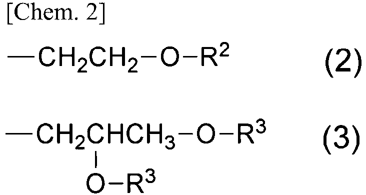 wherein, in the formula (2), R² is a group represented by the following formula (4), and in the formula (3), each R³ is independently a hydrogen atom or a group represented by the following formula (4), where the above formula (1) has at least one group represented by the following formula (4), 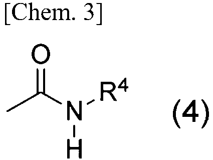 wherein, in the formula (4), R⁴ is a group selected from an alkyl group having 1 to 10 carbon atoms, an aryl group having 6 to 10 carbon atoms, or an aralkyl group having 7 to 10 carbon atoms.
<2> The side-chain urethane-modified silicone macromer according to <1>, in which R⁴ in the formula (4) is a group selected from an aryl group having 6 to 10 carbon atoms or an aralkyl group having 7 to 10 carbon atoms.
<3> A copolymer of the side-chain urethane-modified silicone macromer according to <1> or <2> and a polymerizable hydrophilic monomer.
<4> The copolymer according to <3>, in which the polymerizable hydrophilic monomer includes one or more selected from acrylamide, methacrylamide, N,N-dimethylacrylamide, N,N-dimethylmethacrylamide, N-methyl-N-vinylacetamide, N-vinylpyrrolidone, N-vinylcaprolactam, 2-hydroxyethyl acrylate, 2-hydroxyethyl methacrylate, 4-hydroxybutyl acrylate, N-hydroxyethyl acrylamide, N-hydroxyethyl methacrylamide, N,N-dimethylaminopropyl acrylamide, N,N-dimethylaminopropyl methacrylamide, N,N-dimethylaminoethyl acrylate, N,N-dimethylaminoethyl methacrylate, acrylic acid, and methacrylic acid.
<5> A contact lens including the copolymer according to <3> or <4>.

### Advantageous Effects of Invention

The side-chain urethane-modified silicone macromer of the present invention has a urethane moiety at its side chain, and accordingly exhibits improved compatibility with a polymerizable hydrophilic monomer. Therefore, the side-chain urethane-modified silicone macromer of the present invention is suitable as, for example, a material for contact lenses.

### Brief Description of Drawings

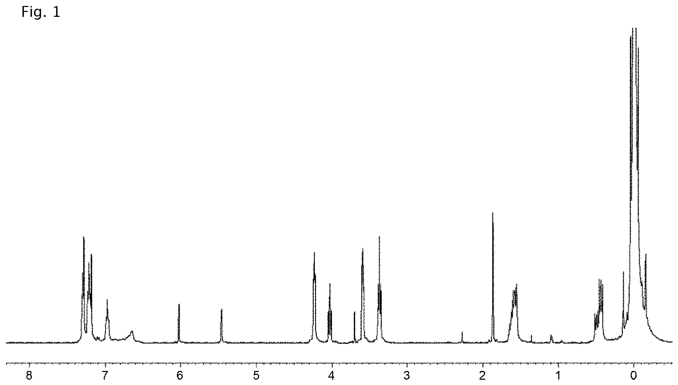

[Fig. 1] Fig. 1 is a ¹H-NMR spectrum chart of a side-chain urethane-modified silicone macromer obtained in Working Example 1.

### Description of Embodiments

The present invention will be described in detail below.

### [Side-chain urethane-modified silicone macromer]

A side-chain urethane-modified silicone macromer of the present invention is represented by the following formula (1). 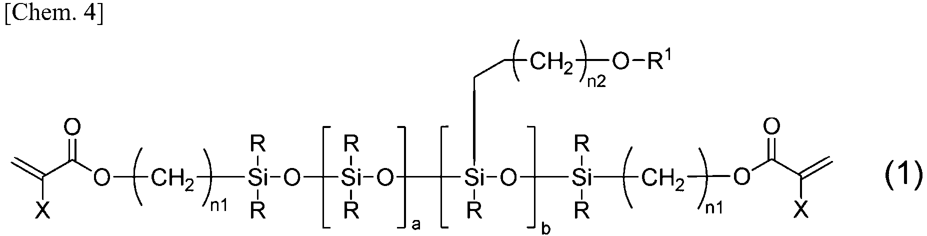 (In the formula (1), each R is independently a group selected from an alkyl group having 1 to 10 carbon atoms, an aryl group having 6 to 10 carbon atoms, or an aralkyl group having 7 to 10 carbon atoms, each X is independently a hydrogen atom or a methyl group, each n1 is independently a number of 2 to 10, n2 is a number of 0 to 8, R¹ is a group represented by the following formula (2) or formula (3), a is a number of 0 to 400, and b is a number of 1 to 100, provided that a + b satisfies 1 ≤ a + b ≤ 500. Note that siloxane units enclosed in brackets a and b may be bonded randomly or in block.) 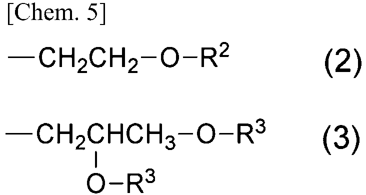 (In the formula (2), R² is a group represented by the following formula (4), and in the formula (3), each R³ is independently a hydrogen atom or a group represented by the following formula (4), where the above formula (1) has at least one group represented by the following formula (4).) 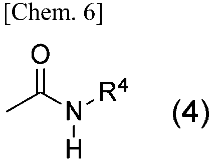 (In the formula (4), R⁴ is a group selected from an alkyl group having 1 to 10 carbon atoms, an aryl group having 6 to 10 carbon atoms, or an aralkyl group having 7 to 10 carbon atoms.)

In the above formula (1), each R is independently a group selected from an alkyl group having 1 to 10 carbon atoms, an aryl group having 6 to 10 carbon atoms, or an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

In the above formula (1), each X is independently a hydrogen atom or a methyl group. Each n1 is independently a number of 2 to 10, preferably 2 to 4, and n2 is a number of 0 to 8, preferably 1 to 3. a is a number of 0 to 400, preferably 5 to 100, and b is a number of 1 to 100, preferably 1 to 20, provided that a + b satisfies 1 ≤ a + b ≤ 500, preferably 6 ≤ a + b ≤ 120. Note that siloxane units enclosed in brackets a and b may be bonded randomly or in block.

In the above formula (2), R² is a group represented by the above formula (4).

In the above formula (3), each R³ is independently a hydrogen atom or a group represented by the above formula (4). The above formula (1) has at least one group represented by the above formula (4).

In the above formula (4), R⁴ is a group selected from an alkyl group having 1 to 10 carbon atoms, an aryl group having 6 to 10 carbon atoms, or an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

### [Method of manufacturing side-chain urethane-modified silicone macromer]

A method of manufacturing the side-chain urethane-modified silicone macromer of the present invention (hereinafter may be abbreviated as "manufacturing method of the present invention") includes a step of causing an isocyanate represented by the following formula (5) to react with a side-chain hydroxy-modified silicone macromer represented by the following formula (6). 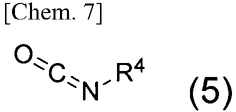 (In the formula (5), R⁴ is a group selected from an alkyl group having 1 to 10 carbon atoms, an aryl group having 6 to 10 carbon atoms, or an aralkyl group having 7 to 10 carbon atoms.) 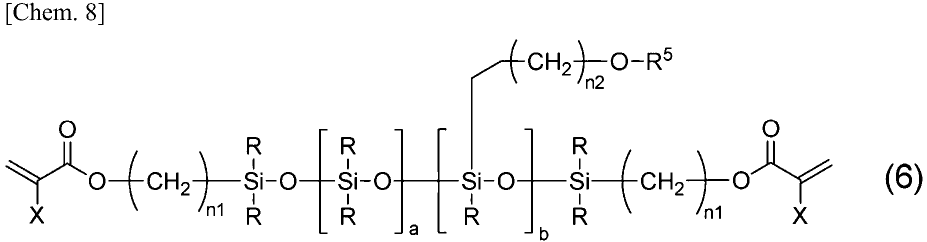 (In the formula (6), each R is independently a group selected from an alkyl group having 1 to 10 carbon atoms, an aryl group having 6 to 10 carbon atoms, or an aralkyl group having 7 to 10 carbon atoms, each X is independently a hydrogen atom or a methyl group, each n1 is independently a number of 2 to 10, n2 is a number of 0 to 8, R⁵ is a group represented by the following formula (7) or (8), a is a number of 0 to 400, and b is a number of 1 to 100, provided that a + b satisfies 1 ≤ a + b ≤ 500. Note that siloxane units enclosed in brackets a and b may be bonded randomly or in block.)

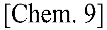

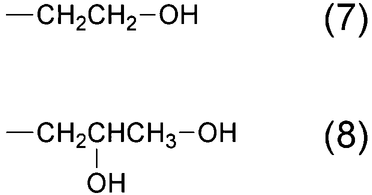

In the above formula (5), R⁴ is a group selected from an alkyl group having 1 to 10 carbon atoms, an aryl group having 6 to 10 carbon atoms, or an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

In the above formula (6), each R is independently a group selected from an alkyl group having 1 to 10 carbon atoms, an aryl group having 6 to 10 carbon atoms, or an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

In the above formula (6), each X is independently a hydrogen atom or a methyl group. Each n1 is independently a number of 2 to 10, preferably 2 to 4, and n2 is a number of 0 to 8, preferably 1 to 3. a is a number of 0 to 400, preferably 5 to 100, and b is a number of 1 to 100, preferably 1 to 20, provided that a + b satisfies 1 ≤ a + b ≤ 500, preferably 6 ≤ a + b ≤ 120. Note that siloxane units enclosed in brackets a and b may be bonded randomly or in block.

In the manufacturing method of the present invention, the mole ratio of the isocyanate represented by the formula (5) to hydroxy groups in the formula (6) is preferably 0.1 to 2, more preferably 0.5 to 1.

Examples of a catalyst used in the manufacturing method of the present invention include publicly known urethanization catalysts. Examples of the urethanization catalyst include tertiary amines such as triethylamine and 1,4-diazabicyclo[2.2.2]octane; and organometallic compounds such as iron(III) acetylacetonate, dibutyltin dilaurate, dioctyltin dilaurate, bismuth 2-ethylhexanoate, bismuth octanoate, tetrabutyl orthotitanate, titanium diisopropoxide bis(acetylacetonate), zirconium tetrabutoxide, and zirconium tetraacetylacetonate. Among them, iron(III) acetylacetonate is preferable.

In the manufacturing method of the present invention, the amount of the catalyst is not limited. The amount is preferably 10 to 1,000 ppm relative to the weight of the hydroxy-modified silicone macromer represented by the formula (6).

In the manufacturing method of the present invention, the reaction temperature in the step of causing the hydroxy-modified silicone macromer represented by the formula (6) to react with the isocyanate represented by the formula (5) in the presence of the urethanization catalyst is preferably 40°C or more and 90°C or less, more preferably 50°C or more and 70°C or less.

In the manufacturing method of the present invention, the reaction conditions including the reaction time, a solvent to be used, and the like are not limited. The reaction time is preferably 1 to 24 hours, more preferably 1 to 12 hours, most preferably 2 to 6 hours. Preferable solvents include aromatic hydrocarbon solvents such as toluene and xylene.

### [Copolymer]

Since the side-chain urethane-modified silicone macromer of the present invention has excellent compatibility with a polymerizable hydrophilic monomer, a copolymer can be readily formed.

Preferable examples of the polymerizable hydrophilic monomer include acrylamide monomers such as acrylamide, methacrylamide, N,N-dimethylacrylamide, and N,N-dimethylmethacrylamide; vinylamide monomers such as N-methyl-N-vinylacetamide; N-vinyl cyclic amide monomers such as N-vinylpyrrolidone and N-vinylcaprolactam; hydroxy-containing monomers such as 2-hydroxyethyl acrylate, 2-hydroxyethyl methacrylate, 4-hydroxybutyl acrylate, N-hydroxyethyl acrylamide, and N-hydroxyethyl methacrylamide; amino-containing monomers such as N,N-dimethylaminopropyl acrylamide, N,N-dimethylaminopropyl methacrylamide, N,N-dimethylaminoethyl acrylate, and N,N-dimethylaminoethyl methacrylate; and carboxylic acid monomers such as acrylic acid and methacrylic acid.

The amount of the polymerizable hydrophilic monomer to be incorporated for formation of the copolymer is preferably 50 to 1,000 parts by mass, more preferably 100 to 500 parts by mass, relative to 100 parts by mass of the side-chain urethane-modified silicone macromer.

The polymerization is performed by application of heat, or by ultraviolet irradiation. These methods are well known in the art. In the polymerization by ultraviolet irradiation, a photopolymerization initiator is added to the side-chain urethane-modified silicone macromer and the polymerizable hydrophilic monomer, and the mixture is irradiated with ultraviolet light. The photopolymerization initiator is typically, but not exclusively, 2-hydroxy-2-methyl-1-phenylpropanone (product name: Omnirad-1173, manufactured by IGM Resins B.V.).

### Examples

The present invention will be described in further detail with reference to the following examples, but modifications can be made as appropriate without departing from the spirit of the present invention. Accordingly, the scope of the present invention should not be construed to be limited by the following specific examples.

### Synthesis of side-chain urethane-modified silicone macromer

### [Working Example 1]

To a separable flask provided with a thermometer, a stirring apparatus, and a reflux condenser were charged 100.0 g of a side-chain hydroxy-modified silicone macromer represented by the following formula (a), 9.3 g of phenyl isocyanate (such an amount that the ratio of the number of moles of isocyanate to the total number of moles of hydroxy groups in the side-chain hydroxy-modified silicone macromer was 1.0), 0.0030 g of iron(III) acetylacetonate, 0.010 g of dibutylhydroxytoluene, 0.010 g of 4-methoxyphenol, and 30 g of toluene, and the mixture was stirred under heating at 60°C for 5 hours. After completion of the reaction, 1.5 g of KYOWAAD 2000 (manufactured by Kyowa Chemical Industry Co., Ltd.) was added thereto, and the mixture was stirred at room temperature for 1.5 hours. Solids were removed by pressure filtration. A low-boiling-point fraction was removed under reduced pressure (0.4 kPa) at 75°C for 2 hours, thereby obtaining 94.9 g of a side-chain urethane-modified silicone macromer represented by the following formula (b).

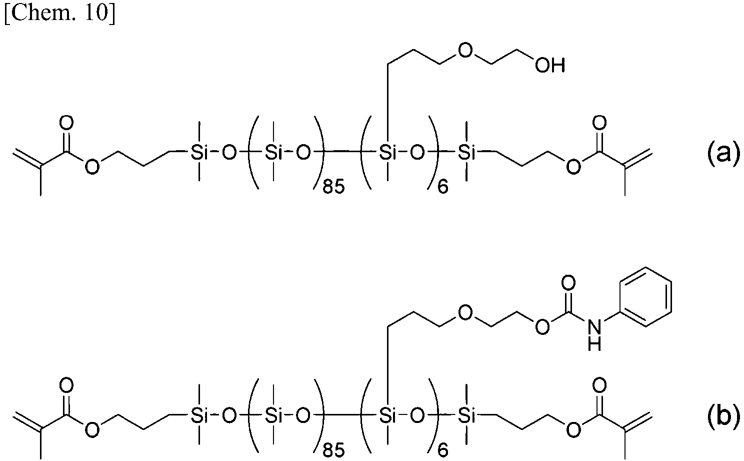

The following shows the ¹H-NMR spectrum of the side-chain urethane-modified silicone macromer obtained in Working Example 1, and Fig. 1 shows a chart of the ¹H-NMR spectrum.
¹H-NMR (400 MHz, CDCl₃): δ -0.51 to 0.21 (m, 540H), 0.35 to 0.57 (m, 16H), 1.47 to 1.70 (m, 16H), 1.87 (s, 6H), 3.37 (t, J = 7.1 Hz, 12H), 3.59 (t, J = 4.6 Hz, 12H), 4.03 (t, J = 7.0 Hz, 4H), 4.24 (t, J = 4.4 Hz, 12H), 5.46 (s, 2H), 6.03 (s, 2H), 6.49 to 7.41 (m, 30H)

### [Working Example 2]

Synthesis was performed in a manner similar to that in Working Example 1 except that 100.0 g of the side-chain hydroxy-modified silicone macromer represented by the following formula (a), 9.8 g of cyclohexyl isocyanate (such an amount that the ratio of the number of moles of isocyanate to the total number of moles of hydroxy groups in the side-chain hydroxy-modified silicone macromer was 1.0), 0.0030 g of iron(III) acetylacetonate, 0.010 g of dibutylhydroxytoluene, 0.010 g of 4-methoxyphenol, and 30 g of toluene were used. A side-chain urethane-modified silicone macromer represented by the following formula (c) (93.6 g) was obtained.

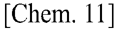

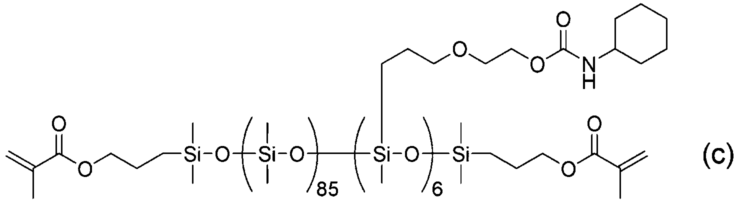

The following shows the ¹H-NMR spectrum of the side-chain urethane-modified silicone macromer obtained in Working Example 2.
¹H-NMR (400 MHz, CDCl₃): δ -0.26 to 0.23 (m, 540H), 0.41 to 0.59 (m, 16H), 1.02 to 1.20 (m, 18H), 1.24 to 1.40 (m, 12H), 1.51 to 1.73 (m, 34H), 1.82 to 1.95 (m, 18H), 3.29 to 3.51 (m, 18H), 3.58 (t, J = 4.5 Hz, 12H), 4.08 (t, J = 6.8 Hz, 4H), 4.16 (t, J = 3.8 Hz, 12H), 4.63 (brs, 6H), 5.51 (s, 2H), 6.08 (s, 2H)

### [Working Example 3]

Synthesis was performed in a manner similar to that in Working Example 1 except that 200.0 g of a side-chain hydroxy-modified silicone macromer represented by the following formula (d), 18.2 g of phenyl isocyanate (such an amount that the ratio of the number of moles of isocyanate to the total number of moles of hydroxy groups in the side-chain hydroxy-modified silicone macromer was 0.5), 0.0060 g of iron(III) acetylacetonate, 0.020 g of dibutylhydroxytoluene, 0.020 g of 4-methoxyphenol, and 70 g of toluene were used. A side-chain urethane-modified silicone macromer represented by the following formula (e) (189 g) was obtained. 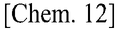 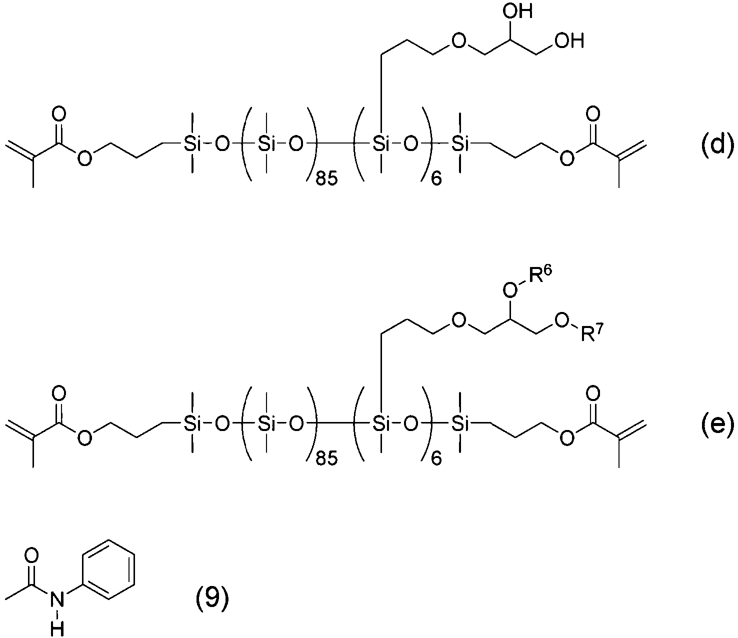 (In the above formula (e), R⁶ and R⁷ were each a hydrogen atom or a group represented by the above formula (9), and an average of 6 hydrogen atoms and an average of 6 groups represented by the above formula (9) were included per molecule.)

The following shows the ¹H-NMR spectrum of the side-chain urethane-modified silicone macromer obtained in Working Example 3.
¹H-NMR (400 MHz, CDCl₃): δ -0.39 to 0.24 (m, 540H), 0.34 to 0.57 (m, 16H), 1.45 to 1.71 (m, 16H), 1.87 (s, 6H), 3.25 to 3.50 (m, 20H), 3.52 to 3.69 (m, 8H), 3.73 to 3.86 (m, 4H), 3.93 to 4.00 (m, 2H), 4.03 (t, J = 7.0 Hz, 4H), 4.07 to 4.41 (m, 8H), 5.47 (s, 2H), 6.03 (s, 2H), 6.61 to 7.43 (m, 30H)

### [Working Example 4]

Synthesis was performed in a manner similar to that in Working Example 1 except that 200.0 g of the side-chain hydroxy-modified silicone macromer represented by the above formula (d), 34.6 g of phenyl isocyanate (such an amount that the ratio of the number of moles of isocyanate to the total number of moles of hydroxy groups in the side-chain hydroxy-modified silicone macromer was 1.0), 0.0120 g of iron(III) acetylacetonate, 0.020 g of dibutylhydroxytoluene, 0.020 g of 4-methoxyphenol, and 100 g of toluene were used. A side-chain urethane-modified silicone macromer represented by the following formula (f) (197 g) was obtained.

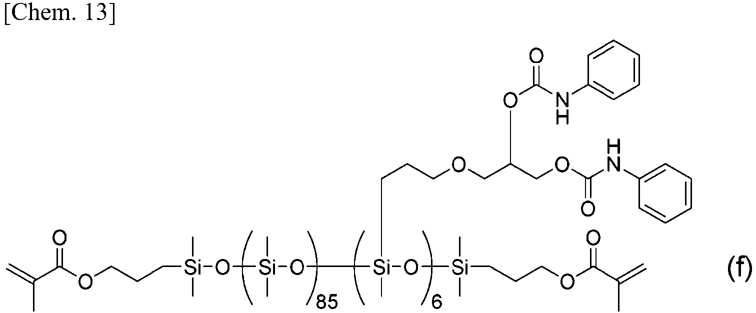

The following shows the ¹H-NMR spectrum of the side-chain urethane-modified silicone macromer obtained in Working Example 4.
¹H-NMR (400 MHz, CDCl₃): δ -0.37 to 0.16 (m, 540H), 0.34 to 0.54 (m, 16H), 1.44 to 1.68 (m, 16H), 1.87 (s, 6H), 3.28 to 3.43 (m, 12H), 3.53 to 3.63 (m, 12H), 4.03 (t, J = 6.8 Hz, 4H), 4.24 to 4.45 (m, 12H), 5.46 (s, 2H), 6.03 (s, 2H), 6.58 to 7.43 (m, 60H)

### [Working Example 5]

Synthesis was performed in a manner similar to that in Working Example 1 except that 200.0 g of the side-chain hydroxy-modified silicone macromer represented by the above formula (d), 19.1 g of cyclohexyl isocyanate (such an amount that the ratio of the number of moles of isocyanate to the total number of moles of hydroxy groups in the side-chain hydroxy-modified silicone macromer was 0.5), 0.0060 g of iron(III) acetylacetonate, 0.020 g of dibutylhydroxytoluene, 0.020 g of 4-methoxyphenol, and 70 g of toluene were used. A side-chain urethane-modified silicone macromer represented by the following formula (g) (195 g) was obtained. 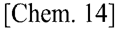 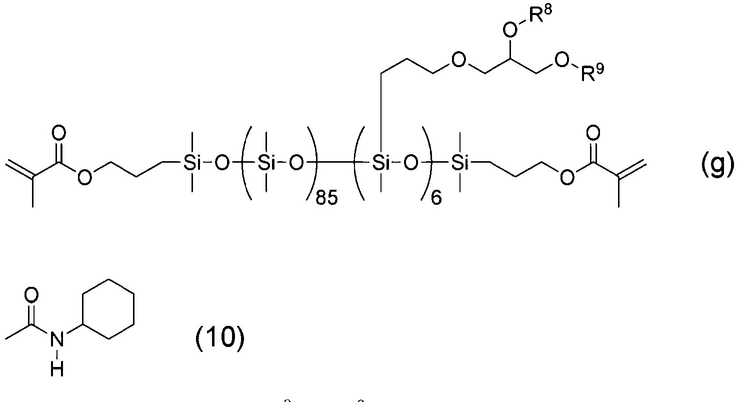 (In the above formula (g), R⁸ and R⁹ were each a hydrogen atom or a group represented by the above formula (10), and an average of 6 hydrogen atoms and an average of 6 groups represented by the above formula (10) were included per molecule.)

The following shows the ¹H-NMR spectrum of the side-chain urethane-modified silicone macromer obtained in Working Example 5.
¹H-NMR (400 MHz, CDCl₃): δ -0.37 to 0.27 (m, 540H), 0.36 to 0.60 (m, 16H), 0.97 to 1.21 (m, 18H), 1.21 to 1.39 (m, 12H), 1.47 to 1.78 (m, 34H), 1.80 to 1.98 (m, 18H), 3.21 to 4.29 (m, 52H), 5.51 (s, 2H), 6.07 (s, 2H)

### [Compatibility test]

### [Test examples 1 to 3]

The side-chain urethane-modified silicone macromers represented by the above formulae (b), (e), and (f) were subjected to a compatibility test. Each silicone macromer was mixed with the same weight of a polymerizable hydrophilic monomer, and whether they were compatible was examined. Employed as the polymerizable hydrophilic monomer were dimethylacrylamide (DMAA), N-vinylpyrrolidine (NVP), and 2-hydroxyethyl methacrylate (HEMA). In the compatibility test, the cases where the mixed solution turned to a transparent and homogeneous liquid were denoted by "o", whereas the cases where the mixed solution did not turn to a transparent and homogeneous liquid were denoted by "×". The results are shown in Table 1.

### [Comparative test examples 1 and 2]

The compatibility test was performed in a manner similar to those in Test examples 1 to 3 except that a side-chain hydroxy-modified silicone macromer was employed in place of the side-chain urethane-modified silicone macromer. The results are shown in Table 1.

**[Table 1]**

| | Test example 1 | Test example 2 | Test example 3 | Comparative test example 1 | Comparative test example 2 |
|---|---|---|---|---|---|
| Silicone macromer | b (Working Example 1) | e (Working Example 3) | f (Working Example 4) | a | d |
| DMAA | × | ○ | ○ | × | ○ |
| NVP | ○ | ○ | ○ | × | × |
| HEMA | × | × | ○ | × | × |

The side-chain urethane-modified silicone macromers of the present invention exhibited a high compatibility with the polymerizable hydrophilic monomers in comparison to the side-chain hydroxy-modified silicone macromers of Comparative test examples 1 and 2.

### Synthesis of copolymer

### [Working Example 6]

The side-chain urethane-modified silicone macromer represented by the above formula (b) (3 g), N-vinylpyrrolidone (NVP) (3 g), and 2-hydroxy-2-methyl-1-phenylpropanone (product name: Omnirad-1173, manufactured by IGM Resins B.V.) (0.02 g) were mixed, and stirred until the mixture became a homogeneous solution. The solution was left to stand and defoamed, and enclosed in a mold. The solution was then subjected to UV irradiation with use of a metal-halide lamp (wavelength: 365 nm, irradiation dose: 95, 000 mJ/cm²) and cured at room temperature (20°C). The cured product was a transparent solid.

### Industrial Applicability

The silicone macromer of the present invention is useful as, for example, a material for contact lenses due to its high compatibility with a polymerizable hydrophilic monomer.

## Claims

1. A side-chain urethane-modified silicone macromer represented by the following formula (1): 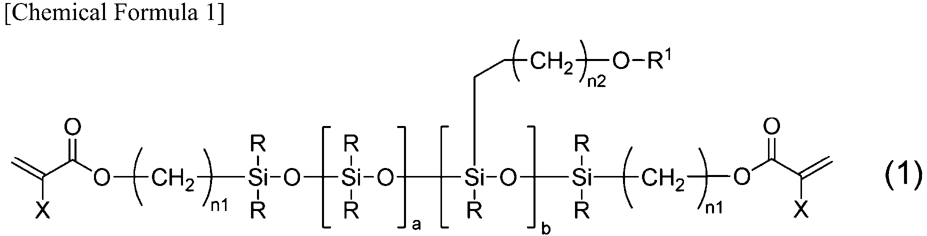 wherein each R is independently a group selected from an alkyl group having 1 to 10 carbon atoms, an aryl group having 6 to 10 carbon atoms, or an aralkyl group having 7 to 10 carbon atoms; each X is independently a hydrogen atom or a methyl group; each n1 is independently a number of 2 to 10; n2 is a number of 0 to 8; a is a number of 0 to 400; b is a number of 1 to 100, provided that a + b satisfies 1 ≤ a + b ≤ 500; siloxane units enclosed in brackets a and b may be bonded randomly or in block; and R¹ is a group represented by a formula (2) or (3) defined as: 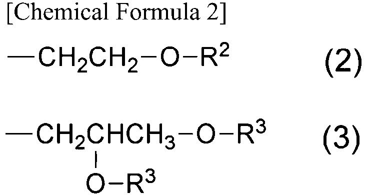 wherein R², in the formula (2), is a group represented by the following formula (4), and each R³ is independently a hydrogen atom or a group represented by the following formula (4), where the above formula (1) has at least one group represented by the following formula (4): 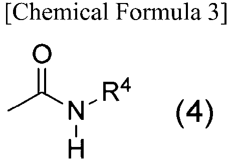 wherein R⁴ is a group selected from an alkyl group having 1 to 10 carbon atoms, an aryl group having 6 to 10 carbon atoms, or an aralkyl group having 7 to 10 carbon atoms.

2. The side-chain urethane-modified silicone macromer according to claim 1, wherein R⁴ in the formula (4) is a group selected from an aryl group having 6 to 10 carbon atoms or an aralkyl group having 7 to 10 carbon atoms.

3. A copolymer of the side-chain urethane-modified silicone macromer according to claim 1 and a polymerizable hydrophilic monomer.

4. The copolymer according to claim 3, wherein the polymerizable hydrophilic monomer includes one or more selected from acrylamide, methacrylamide, N,N-dimethylacrylamide, N,N-dimethylmethacrylamide, N-methyl-N-vinylacetamide, N-vinylpyrrolidone, N-vinylcaprolactam, 2-hydroxyethyl acrylate, 2-hydroxyethyl methacrylate, 4-hydroxybutyl acrylate, N-hydroxyethyl acrylamide, N-hydroxyethyl methacrylamide, N,N-dimethylaminopropyl acrylamide, N,N-dimethylaminopropyl methacrylamide, N,N-dimethylaminoethyl acrylate, N,N-dimethylaminoethyl methacrylate, acrylic acid, and methacrylic acid.

5. A contact lens comprising the copolymer according to claim 3.
